Europäisches Patentamt

European Patent Office

Office européen des brevets

(11) Veröffentlichungsnummer: **0 283 440**
**A2**

(12) **EUROPÄISCHE PATENTANMELDUNG**

(21) Anmeldenummer: **88810166.4**

(22) Anmeldetag: **16.03.88**

(51) Int. Cl.⁴: **F 21 Q 3/00**
**B 64 F 1/18**

(30) Priorität: **16.03.87 CH 975/87**

(43) Veröffentlichungstag der Anmeldung:
**21.09.88 Patentblatt 88/38**

(84) Benannte Vertragsstaaten:
**AT BE DE FR IT NL SE**

(71) Anmelder: **META-FER AG**
**Fabrikstrasse 10**
**CH-9470 Buchs (CH)**

(72) Erfinder: **Vadseth, Jan E.**
**Joachimsbüel**
**CH-9475 Sevelen (CH)**

(74) Vertreter: **Büchel, Kurt F., Dr.**
**Patentanwalt Dr. Kurt F. Büchel Bergstrasse 297**
**FL-9495 Triesen (LI)**

(54) **Flugfeldbeleuchtung mit einer in einem Gehäuse angeordneten Lichtquelle.**

(57) Die Erfindung betrifft eine Flugfeldbeleuchtung, hauptsächlich für die Markierung von Flugzeugparkplätzen, Wegen für das Bodenpersonal usw. Sie soll von allen Seiten und aus jedem Blickwinkel selbst bei schlechtesten Umweltbedingungen und auf grössere Entfernung gut sichtbar sein. Sie besteht aus einer in einem Gehäuse angeordneten Lichtquelle, die durch zumindest eine in das Gehäuse eingebaute Linse halbkugelförmiges Licht abstrahlt, wobei der Lichtstrahl (1) im Zenith der Halbkugel eine um mindestens 20 Prozent höhere Lichtstärke aufweist als im Bereich (13) zwischen 10 und 30 Winkelgraden über dem untersten Abstrahlrand (2).

Fig. 3

EP 0 283 440 A2

**Beschreibung**

Flugfeldbeleuchtung mit einer in einem Gehäuse angeordneten Lichtquelle

Die Erfindung betrifft eine Flugfeldbeleuchtung nach dem Oberbegriff des Anspruches 1. Derartige Flugfeldbeleuchtungen sind seit langem bekannt und finden hauptsächlich für die Markierung von Flugzeugparkplätzen, Wegen für das Bodenpersonal usw. Anwendung. Sie sollen von allen Seiten und aus jedem Blickwinkel gut erkennbar sein.

In der DE-PS 1125858, in der DE-AS 1497339 und in der US-PS 3999054 sind jeweils geringfügig unterschiedlich ausgestaltete Flugfeldbeleuchtungskörper dieser Gattung beschrieben. Sie sind sehr flach ausgebildet und ragen praktisch nicht über den Fahrbahnbelag hervor. Dies ist sehr vorteilhaft, da diese Flugfeldbleuchtungen überfahren werden können und beispielsweise durch Schneepflüge bei der Schneeräumung auch kaum beschädigt werden können.

Eine andere Art von Flugfeldbeleuchtungen mit Rundumlicht ist in der US-PS 4104711 beschrieben. Bei dieser Art ist ein Lampenoberteil mit einem Lampenunterteil verbunden, wobei der Lampenunterteil über einen Ständer mit einer Grundplatte verankert ist. Diese Art der Ausgestaltung hat zwar den Vorteil, bei Schneelage noch aus dem Schnee herauszuragen, hat jedoch aber auch den Nachteil, nicht überfahren werden zu können, bzw. bei der Schneeräumung im Wege zu sein.

Bei normalen Wetterbedingungen können die bekannten Flugfeldbeleuchtungen mehr oder weniger gut gesehen werden. Es hat sich jedoch gezeigt, dass bei ungünstigen Umweltbedingungen, wie Schneefall, Regen, Nebel, Staubverwirbelungen usw., insbesondere in den knapp über dem Boden liegenden Regionen das Licht so stark reflektiert und zerstreut wird, dass unter Umständen keine klare Linie von Flugfeldbeleuchtungskörpern, bzw. kein Weg zwischen solchen Linien mehr erkennbar ist, sondern grössere räumliche Abschnitte in ein mehr oder weniger diffuses Licht getaucht werden. Die Orientierung nach solchen Lichtern, insbesondere aus grösserer Entfernung, ist daher nur schlecht möglich.

Die Erfindung stellt sich nun die Aufgabe, eine Flugfeldbeleuchtung zu schaffen, die selbst bei schlechtesten Umweltbedingungen geeignet ist, auch auf grössere Entfernung eine Orientierung zu erlauben, und die trotz stark reflektierenden, bzw. Licht zerstreuenden Elementen in der Luft ein klares Bild über die örtliche Lage der Beleuchtungskörper abzugeben im Stande ist.

Die gestellte Aufgabe wird durch das Kennzeichen des Anspruches 1 erstmals zufriedenstellend gelöst.

Die Erfindung macht sich dabei unter anderem eine Entdeckung zu Nutze, wonach Nebel und Staub als die häufigsten Problemquellen für schlechte Sicht in unterschiedlichen Schichten unterschiedlich stark Licht reflektieren, bzw. zerstreuen. Darüberhinaus macht sich die Erfindung die Beobachtung zu Nutze, dass Menschen beim Aufspüren von Lichtsignalen bei sehr schlechten Sichtverhältnissen, in die

Ferne blickend, ihre Blickhöhe stets etwas über dem Horizont ansetzen.

Ohne bei normalen Lichtverhältnissen zu blenden, ist es dadurch erstmals möglich, auch bei schlechten Sichtverhältnissen eine deutliche Markierung beispielsweise von Parkplätzen für Flugzeuge, oder oben beschriebener Wege vorzunehmen. Der starke Strahl in der Mitte hat nur eine sehr geringe Winkelausbreitung, wodurch er selbst nur bei direkter Betrachtung von oben blenden könnte. Die Bereiche von Parkplätzen und dgl. sind jedoch von den Flugfeldern derart separiert, dass unter keinen normalen Umständen ein Pilot in die Lage kommt, diese Flugfeldbeleuchtungen von oben zu sehen, wodurch die Gefahr eines unbeabsichtigten Blendens ausgeschaltet ist. Erfindungsgemäss po sitiv wirkt sich derselbe Strahl allerdings so aus, dass eine Art Leuchtpfahl über dem Flugfeldbeleuchtungskörper sichtbar wird, der deutlich aus dem diffusen verschwommenen Lichtermeer in Bodennähe herausragt. Da sich diese Strahlen mit jenen der anderen Flugfeldbeleuchtungskörper nicht kreuzen, wie dies die erfindungsgemäss schwächeren Rundumstrahlen grundsätzlich tun, werden auch Effekte unbeabsichtigter Lichtmaxima, die ebenso zu einer Fehlorientierung führen können, vermieden.

Weitere Merkmale und Ausgestaltungen der Erfindung sind in den Kennzeichen der Unteransprüche beschrieben.

In besonders grosser Höhe erkennbare Lichtstrahlen im Zenith werden durch das Merkmal des Anspruches 2 erreicht; bei nicht parallelen Strahlen ist ein Winkelbereich von höchstens plus/minus 10 Grad, vorzugsweise jedoch plus/minus 5 Grad (von der Lotrechten gemessen) optimal.

Wird gemäss dem Kennzeichen des Anspruches 4 die Lichtstärke in dem an den Strahl angrenzenden Bereich etwa auf die Hälfte desjenigen Bereiches zwischen 10 und 30 Winkelgraden über dem Boden reduziert, so ist bei normalen Sichtverhältnissen im Nahbereich der Flugfeldbeleuchtungskörper eine Blendwirkung für vorbeifahrende oder vorbeigehende Personen ausgeschlossen, bzw. reduziert und gleichzeitig der Energieaufwand reduziert, wodurch insgesamt bei etwa gleich hohem Energieverbrauch wie für herkömmliche Flugfeldbeleuchtungseinrichtungen eine doch wesentlich bessere Sichtbarkeit insgesamt gegeben ist.

Die erfindungsgemässe Ausgestaltung findet vorzugsweise bei jenen flachen Flugfeldbeleuchtungen nach den eingangs zitierten drei Vorveröffentlichungen Anwendung, wobei deren Linse dann entsprechend dem Kennzeichen des Anspruches 5 auszubilden ist. Durch die erfindungsgemässe Ausgestaltung der Fresnellinse wird eine hohe Lichtausbeute sichergestellt.

Die Ausbildung der Fresnellinse nach Anspruch 7 benötigt relativ wenig Linsenmaterial, hat jedoch eine relativ grosse Divergenz des Strahles im Zenith zur Folge, während die Ausbildung nach Anspruch 8 etwas mehr Linsenmasse erfordert, dafür aber einen wesentlich schmäleren und intensiveren Strahl im Zenith liefert.

Das Merkmal des Anspruches 9 erlaubt eine relativ geringe Linsenmasse bei guter Aufnahmequalität im Gehäuse, wobei allfällige Lichtverluste an den Aufnahmeflächen reduziert sind. Der Winkel ist dabei hauptsächlich von dem Brechungsindex des Linsenmaterials abhängig. Bei der vorliegenden Erfindung wurde bei Versuchen ein Brechungsindex von 1,47 als optimal gefunden.

Sind die Aufnahmeflächen, wie im Anspruch 10 gekennzeichnet, verspiegelt, so wird der meiste Anteil des Lichtes mit Sicherheit durch die Linse geworfen.

Mit relativ geringem Aufwand und gutem Reflexionswirkungsgrad ist ein Gehäuse nach dem Anspruch 11 ausgestattet, wobei eine Variante nach dem Anspruch 12 mehr Bauaufwand bedeutet, aber dafür eine noch höhere Lichtausnutzung sicherstellt.

An Hand der Zeichnung soll die Erfindung beispielhaft näher erläutert werden. Es zeigen dabei

die Fig.1 eine aus dem Boden ragende Flugfeldbeleuchtung mit divergierendem starken Strahl in der Mitte,

die Fig.2 eine ähnliche Flugfeldbeleuchtung mit starkem Strahl aus parallel gebündeltem Licht in der Mitte,

die Fig.3 eine erfindungsgemässe Fresnellinse für eine mit dem Boden fluchtende Flugfeldbeleuchtung,

die Fig.4 ein Gehäuse für eine derartige Fresnellinse und

die Fig.5 eine zweite Variante einer Fresnellinse.

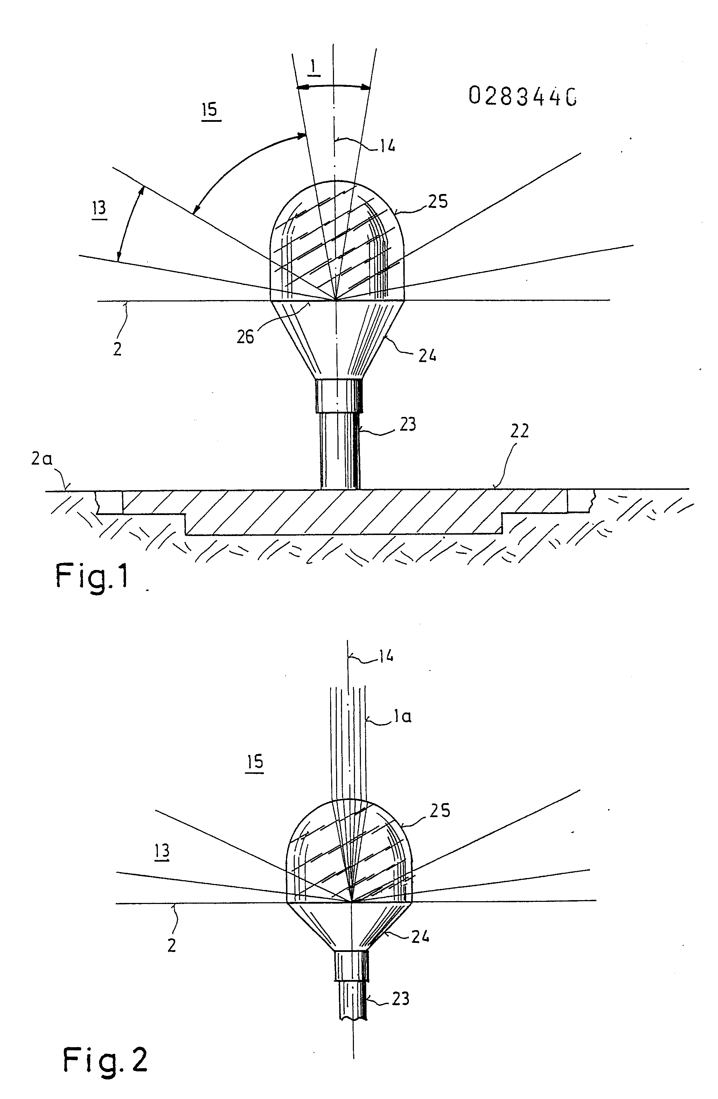

In der Fig.1 ist eine herkömmliche Flugfeldbeleuchtung dargestellt, die auf einem in dem Boden 2a eingelassenen Sockel 22 mittels eines Ständers 23 verankert ist. Die Flugfeldbeleuchtung verfügt über einen Lampenunterteil 24, der mit einem als Linse ausgebildeten Lampenoberteil 25 verbunden ist. Die Verbindungsstelle zwischen dem Lampenunterteil 24 und dem Lampenoberteil 25 entspricht einer Oeffnungslinie 26, die in einer unteren Lichtaustrittsebene an einem unteren Lichtaustrittsrand 2 liegt.

Der Lampenoberteil 25 ist durch bekannte und daher nicht näher dargestellte Massnahmen so ausgebildet, dass abstrahlendes Licht sich halbkugelförmig ausbreitet, wobei jedoch, erfindungsgemäss, unterschiedlich starke Leuchtstärken in bestimmten Bereichen erzielt werden:

Ein Bereich 13 zwischen 10 und 30 Winkelgraden über dem Abstrahlrand 2 verfügt über eine mindestens 20 % geringere Lichtstärke als ein Bereich mit einem Lichtstrahl 1, der in einem Winkelbereich von höchstens plus/minus 10 Grad von der Lotrechten 14 nach oben durch den Zenith des Lampenoberteiles 25 strahlt. Ein Bereich 15 zwischen diesem Strahl 1 und dem Bereich 13 ist mit einer nur halb so grossen Lichtstärke wie der Bereich 13 versehen. Dadurch wird erreicht, dass die Flugfeldbeleuchtung aus einem sehr flachen Winkel, d.h. z.B. aus grösserer Entfernung vom Boden aus, gut gesehen werden kann, wobei sich die Leuchtstärke beim Näherkommen an die Flugfeldbeleuchtung für einen Betrachter scheinbar verringert (etwa auf die Hälfte), so dass es zu keiner Blendwirkung kommt. Der Strahl in der Mitte stellt sicher, dass ein klar abgegrenztes Licht nach oben abgegeben wird, wodurch beispielsweise darüber wartende Flugzeuge markiert werden können. Durch den starken Strahl 1 ergibt sich darüber hinaus eine gute Sichtbarkeit des Lichtes bei Nebel, Schnee oder staubversetzter Luft durch eine Reflexion des Lichtes an den Nebel-, Schnee- oder Staubpartikeln bis in relativ grosse Höhen über der Flugfeldbeleuchtung.

In der Fig.2 ist eine gleichartige Flugfeldbeleuchtung dargestellt, wobei der starke Strahl 1a im Zenith aus parallel gebündeltem Licht besteht. Die parallele Bündelung verringert die Streuung in grösseren Höhen, wodurch eine derart ausgestaltete Flugfeldbeleuchtung Licht in noch höhere Regionen über dem Flugfeld abstrahlt.

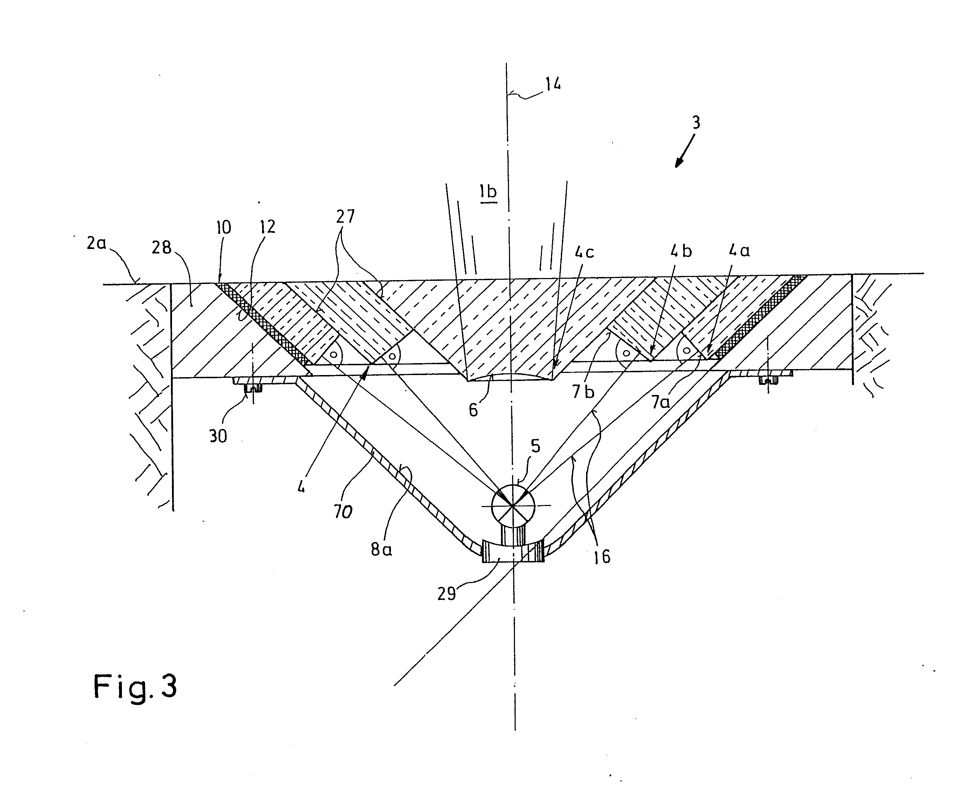

Eine andere Art von Flugfeldbeleuchtung ist in der Fig.3 dargestellt. Bei dieser Ausführungsform gibt es keine den Boden 2a überragenden Bauelemente. Der Lampenoberteil ist als nach aussen flache Fresnellinse 3 ausgebildet, deren Abstufungen 4 an der einer Lichtquelle 5 zugewandten Seite der Linse 3 vorgesehen sind. In diesem Ausführungsbeispiel sind insgesamt drei Abstufungen 4a, 4b und 4c vorgesehen, die als konzentrische Ringsegmente ausgebildet und miteinander verklebt sind. Die Fresnellinse 3 ist an ihrem Umfang 10 zur Mitte verlaufend, bzw. zur Lichtquelle 5 gerichtet konisch verjüngt ausgebildet, ebenso, wie die Ringsegmente an ihren Berührungs-, bzw. Klebeflächen 27 konisch ausgebildet sind. Die aussenliegenden Abstufungen 4a und 4b sind mit je einer Fläche 7a, bzw. 7b für den Lichteintritt versehen, die in einem rechten Winkel zu auftreffenden Lichtstrahlen 16 von der Lichtquelle 5 liegen. Dadurch werden die Lichtstrahlen in diesen Abschnitten praktisch brechungslos in das Innere der Linse aufgenommen und es erfolgt lediglich an der Oberfläche der Linse 3 eine Brechung entsprechend dem Brechungsindex des Linsenmaterials in Richtung zum Boden 2a. Dadurch können Abstrahlwinkel bis unter 3 Grad vom Boden 2a erreicht werden. Der mittlere Vorsprung 4c verfügt über eine konkave Krümmung 6. Bedingt durch diese Krümmung wird Licht von der Lichtquelle 5 zu einem Strahl 1b gerichtet, der in einen Winkel von plus/minus 5 Grad zur Lotrechten 14 nach oben abstrahlt. Die Abstufung 4c ist durch ihre Ausbildung der Lichtquelle näher, wodurch der Strahl 1b gegenüber den anderen austretenden Lichtstrahlen verstärkt ist. Die Linse 3 ist in einer gegengleichen konischen Aufnahme in einem Prismenhalter 28 an dessen Aufnahmeflächen 12 eingeklebt. Die Aufnahmeflächen 12 sind verspiegelt ausgeführt. Die Lichtquelle 5 sitzt austauschbar auf einem Sockel 29, der in einem Parabolspiegel 70 eingesetzt ist, dessen Innenseite 8a verspiegelt, gegebenenfalls eloxiert ist. Der Parabolspiegel 70 ist mittels Schrauben 30 an dem Prismenhalter 28 angeschraubt.

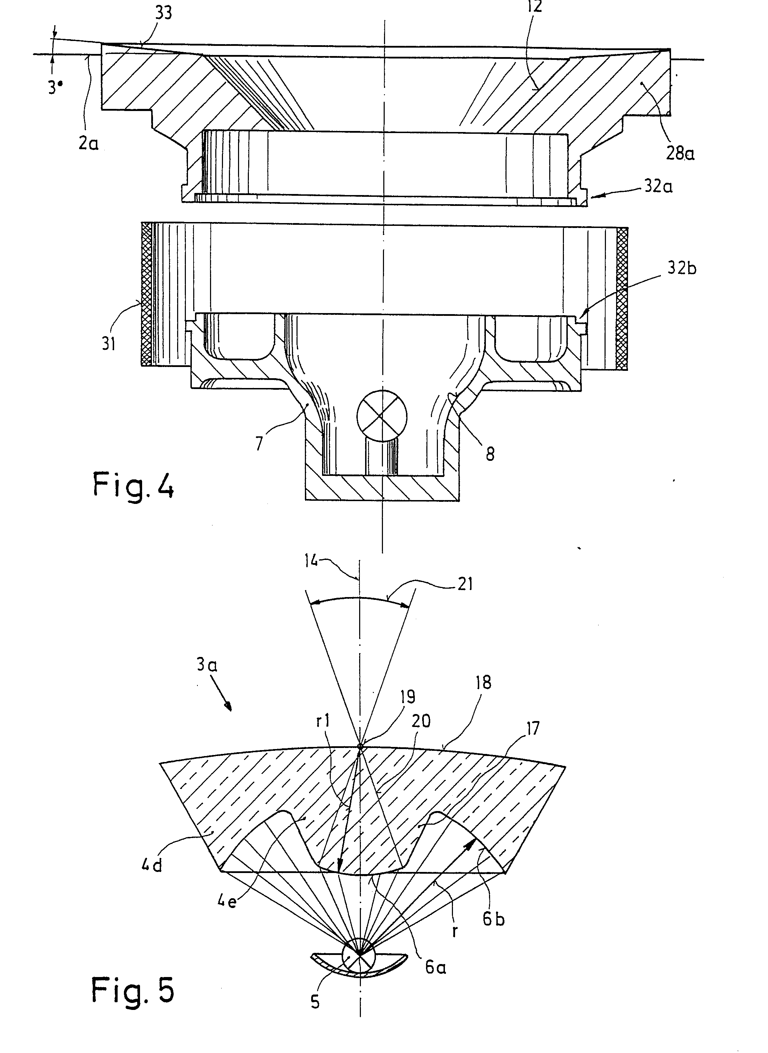

In der Fig.4 ist eine andere Variante für das Gehäuse der Flugfeldbeleuchtung im noch nicht montierten Zustand dargestellt, das aus einem Prismenhalter 28a besteht, der mittels Schrumpf-

schlauch 31 mit einem Gehäuse 7 verbindbar ist, wobei der Prismenhalter 28a und das Gehäuse 7 je einen übergreifenden Kragen 32a und 32b ausgebildet haben, die - einander spielfrei übergreifend - zusammengesetzt werden können. Das Gehäuse 7 besteht aus Aluminiumguss, ist an seiner Innenseite 8 eloxiert und spiegelnd ausgeführt. Der Prismenhalter 28a ist in seinem Bereich rund um die Aufnahmeflächen 12 für die Fresnellinse geringfügig keilförmig ansteigend ausgebildet, wodurch eine ringförmige Erhebung 33 gebildet ist, die einen Schutz vor Beschädigungen der Linse beispielsweise durch einen Schneepflug verhindert. Die Erhebung 33 ist höchstens 1-3 mm hoch und die aufsteigende Flanke bildet mit dem Boden 2a einen Winkel von höchstens 3 Grad.

Die in der Fig.5 dargestellte Fresnellinse 3a verfügt nur über 2 Abstufungen 4d und 4e, wobei die mittlere, die Abstufung 4e, eine konvexe Krümmung 6a aufweist. Die Abstufung 4d verfügt über eine konkave Krümmung 6b, deren Punkte von der Lichtquelle 5 jeweils gleiche Abstände r haben. Die Konvexe Krümmung 6a ist so ausgebildet - angeordnet durch den Radius r1 - , dass der Brennpunkt 19 der Abstufung 4e in der Mitte der Oberfläche 18 der Linse 3a liegt. Die durch die konvexe Krümmung 6a gesammelten Sammelstrahlen 20 haben in ihrem maximalen Bereich einen Streuwinkel 21 von 20 Grad.

Durch die dargestellten Figuren und deren Beschreibung ist die Erfindung in keiner Weise eingeschränkt. So können beliebige optische Systeme vorgesehen sein, die beispielsweise durch eine neutrale Glasabdeckung abgedeckt sind. Wesentlich ist die Ausbildung der Lichtstrahlen, bzw. der Abstrahlverhältnisse selbst. Im Rahmen des Fachwissens eines Optikers gibt es hiefür verschiedenste Möglichkeiten, auf die nicht näher eingegangen werden muss.


**Patentansprüche**


1. Flugfeldbeleuchtung mit einer in einem Gehäuse angeordneten Lichtquelle, die durch zumindest eine in das Gehäuse eingesetzte Linse halbkugelförmiges Licht abstrahlt, dadurch gekennzeichnet, dass der Lichtstrahl (1) im Zenith der Halbkugel eine um mindestens 20 Prozent höhere Lichtstärke aufweist als im Bereich (13) zwischen 10 und 30 Winkelgraden über dem untersten Abstrahlrand (2) der Flugfeldbeleuchtung, bzw. über dem Boden (2a).

2. Flugfeldbeleuchtung nach Anspruch 1, dadurch gekennzeichnet, dass der Strahl (1a) im Zenith parallel gebündelt ist. (Fig.2)

3. Flugfeldbeleuchtung nach Anspruch 1, dadurch gekennzeichnet, dass der Strahl (1) im Zenith einen Winkelbereich von höchstens ±10 Grad, vorzugsweise von ±5 Grad (von der Lotrechten (14) gemessen) überdeckt. (Fig. 1)

4. Flugfeldbeleuchtung nach einem der vorhergehenden Ansprüche, dadurch gekennzeichnet, dass zwischen dem Bereich (3) von 30 Winkelgraden über dem untersten Abstrahlrand (2), bzw. über dem Boden (2a) und dem Strahl (1,1a) im Zenith ein zweiter Bereich (15) geringerer, vorzugsweise höchstens einer halb so grossen Lichtstärke wie derjenigen im Bereich (13) von 10 bis 30 Winkelgraden über dem Boden (2) vorgesehen ist. (Fig.1,2)

5. Flugfeldbeleuchtung nach einem der vorhergehenden Ansprüche, dadurch gekennzeichnet, dass die Linse als Fresnellinse (3) ausgebildet ist, deren Abstufungen (4) vorzugsweise der Lichtquelle (5) zugewandt sind. (Fig.3)

6. Flugfeldbeleuchtung nach Anspruch 5, dadurch gekennzeichnet, dass wenigstens eine - vorzugsweise drei - der Abstufungen (4a,b) eine zur Lichtquelle (5) gewandte Fläche (7a,b) aufweisen, die sich im rechten Winkel zu dem von der Lichtquelle (5) auf die Fläche (7a,b) auftreffenden Lichtstrahl (16) erstreckt.

7. Flugfeldbeleuchtung nach Anspruch 5 oder 6, dadurch gekennzeichnet, dass die Linse (3) an ihrer Innenseite in der Mitte eine Krümmung (6) aufweist, deren Radius im Verhältnis zu der nächsten Entfernung zwischen Lichtquelle (5) und Linse (3) steht. (Fig.3)

8. Flugfeldbeleuchtung nach einem der Ansprüche 5 bis 8, dadurch gekennzeichnet, dass die Linse 3a an ihrer Innenseite in der Mitte eine konvexe, vorzugsweise an einem Vorsprung (17) ausgebildete Krümmung (6a) aufweist, deren Brennpunkt (19) für ihre Sammelstrahlen (20) an der Oberfläche (18) der Linse (3a) liegt, wobei der Winkel (21) zwischen den äussersten Sammelstrahlen (20) höchstens 20 Grad ist. (Fig.3,5)

9. Flugfeldbeleuchtung nach einem der vorhergehenden Ansprüche, dadurch gekennzeichnet, dass die Linse (3) entlang ihres Umfanges (10) konisch ausgebildet ist, wobei die Steigung des Konus im Schnitt betrachtet mit der Lotrechten (14) einen Winkel (11) von 30-60, vorzugsweise von 40-50 Grad einschliesst. (Fig.3)

10. Flugfeldbeleuchtung nach einem der vorhergehenden Ansprüche, dadurch gekennzeichnet, dass das Gehäuse (7) und/oder die Aufnahmeflächen (12) für die Fresnellinse (3) und/oder das Gehäuse (7) an ihren der Linse (3) zugewandten Innenflächen (8) verspiegelt ausgeführt ist (sind). (Fig.4)

11. Flugfeldbeleuchtung nach einem der vorhergehenden Ansprüche, dadurch gekennzeichnet, dass das Gehäuse (7) aus Aluminiumguss ausgeführt ist, und dass die Innenflächen (8) eloxiert und gegebenenfalls poliert sind. (Fig.4)

12. Flugfeldbeleuchtung nach einem der vorhergehenden Ansprüche, dadurch gekennzeichnet, dass hinter der Lichtquelle (5) ein Parabolreflektor (7a) vorgesehen ist. (Fig. 3)

Bezugszeichenliste Lichtstrahl 1,
Boden 2a,
unterer Abstrahlrand 2,
Fresnellinse 3, Abstufungen 4,
Lichtquelle 5, Krümmung 6,
Gehäuse 7,
Innenfläche 8,
Umfang 10,
Winkel 11,
Aufnahmefläche 12, Bereich 13,
Lotrechte 14,
zweiter Bereich 15,
auftreffender Lichtstrahl 16,
Vorsprung 17,
Oberfläche 18,
Brennpunkt 19,
Sammelstrahlen 20,
Streuwinkel 21,
Sockel 22,
Ständer 23,
Lampenunterteil 24,
Lampenoberteil 25,
Oeffnungslinie 26,
Trennlinie 27,
Prismenhalter 28,
Sockel 29,
Schrauben 30,
Schrumpfschlauch 31,
kragenförmige Ausbildung 32,
Erhebung 33

Fig.1

Fig.2

0283440

Fig. 3

028344C

0283440

Fig. 4

Fig. 5